Europäisches Patentamt

European Patent Office

Office européen des brevets

(11) Veröffentlichungsnummer: **0 446 640 A1**

## (12) EUROPÄISCHE PATENTANMELDUNG

(21) Anmeldenummer: **91102128.5**

(22) Anmeldetag: **15.02.91**

(51) Int. Cl.5: **B65G 53/66, B65G 53/12**

(30) Priorität: **09.03.90 DE 4007430**

(43) Veröffentlichungstag der Anmeldung:
**18.09.91 Patentblatt 91/38**

(84) Benannte Vertragsstaaten:
**AT BE CH DE DK ES FR GB GR IT LI LU NL SE**

(71) Anmelder: **Bühler GmbH**
**Ernst-Amme-Strasse 19**
**W-3300 Braunschweig(DE)**

(72) Erfinder: **Essmann, Wolfgang, Dipl.-Ing.**
**Tauberweg 27**
**W-3300 Braunschweig(DE)**

(74) Vertreter: **Révy von Belvárd, Peter**
**BÜHLER AG PT-5**
**CH-9242 Uzwil(CH)**

(54) Verfahren zum Fördern von Portionen aus körnigem oder pulvrigem Schüttgut sowie Vorrichtung zur Durchführung des Verfahrens.

(57) An einem Pfropfenförderer mit taktweise betriebenen, an je einer eingangsseitig und einer ausgangsseitig eines Sendegefässes (3) gelegenen Druckluftleitung (12,17) gelegenen Taktventilen (14,18) ist dem Sendegefäss (3) ein Füllstandssensor (5) zugeordnet, der wenigstens eines der beiden Taktventile (14 bzw. 18) steuert.

Fig. 1

Der Gegenstand der Erfindung ist ein Verfahren zur Förderung von Portionen aus körnigem oder pulvrigem Schüttgut nach dem Oberbegriff des Anspruchs 1 sowie eine Vorrichtung zur Durchführung des Verfahrens.

Die Förderung von körnigem oder pulvrigem Schüttgut in Form von Portionen, auch als Pfropfenförderung bezeichnet, wird insbesondere bei empfindlichen Gütern angewandt. Dabei wird im Gegensatz zur üblichen pneumatischen Schüttgutförderung, bei der das Fördergut innerhalb des Trägergasstromes suspendiert ist, eine abwechselnde Folge aus Gutportionen ("Pfropfen") und Druckgaspolstern gefördert. Das Fördergut wird aus einem Sendegefäss, das im allgemeinen aus einem unter Druck stehenden Vorratsgefäss beschickt wird, in eine Förderleitung weiterbefördert. Das Volumen des Sendegefässes entspricht dabei vorteilhafterweise dem zu bildenden Gutpfropfen.

In der DE-B-26 22 073 wird eine Einrichtung zum pneumatischen Transport von Schüttgut beschrieben, bei der ein Druckbehälter mit relativ grossem Volumen das Schüttgut aufnimmt. Eine unterhalb des Druckbehälterauslaufs angeordnete Füllstandssonde steuert bei Absinken des Schüttgutspiegels ein Verschlussorgan am Druckbehälterauslauf, ein Absperrventil einer Druckluftzuführung und ein Oeffnungsventil einer Entspannungsleitung am Druckbehälter. Damit wird das schlagartige Expandieren des Druckmediums in die Förderleitung vermieden. Jedoch ist aufgrund der Grösse des Druckbehälters, die eine kontinuierliche Förderung im eigentlichen Sinn nicht ermöglicht, und aufgrund der unkorrelierten Druckbeaufschlagung von Druckbehälter und Förderleitung die bei niedriger Fördergeschwindigkeiten erfolgende pneumatische Förderung keine Pfropfenförderung. Die Bildung von Gutportionen geschieht in der Förderleitung, wo durch taktweises Einleiten von Druckmedium eine Unterteilung des Gutstranges in Gutportionen erreicht wird.

Eine derartige Einrichtung wird in der DE-C-26 26 411 beschrieben, die hiermit im Rahmen dieser Beschreibung als geoffenbart gilt, und bei der ein Sendegefäss vorgesehen ist, dessen Volumen in etwa dem eines Gutpfropfens entspricht und das über eine Rotationsschleuse mit dem Schüttgut beschickt wird. Dabei ist je eine Druckluftleitung zum Sendegefäss und der Förderleitung vorgesehen, wobei das über erstere eingeleitete Druckmedium das eingespeiste Schüttgut gegen den trichterförmigen Auslauf des Sendegefässes drückt und das über letztere eingeleitete Druckmedium den in die Förderleitung gepressten Gutstrang in einzelne Portionen trennt, die ihrerseits durch Polster aus Druckmedien getrennt sind. Das Einleiten des Druckmediums in eine Förderleitung muss demzufolge in einer periodisch intermittierenden Weise erfolgen, was durch eine entsprechende Steuerung eines Magnetventils über ein Zeitrelais geschieht. Dieses Zeitrelais steuert in gleicher Weise, nur gegenperiodisch, ein Magnetventil in der Druckleitung zum Sendegefäss, so dass bei offenem Ventil der Druckleitung zum Sendegefäss das Ventil der Druckleitung zur Förderleitung geschlossen ist. Diese den beiden Druckleitungen zugeordneten, durch das Zeitrelais bestimmten Taktzeiten werden je nach Förderleistung eingestellt. Das bedingt Unsicherheiten, die vor allem daraus resultieren, dass die Beschickung des Sendegefässes nicht unbedingt gleichmässig erfolgt.

Der Erfindung liegt damit die Aufgabe zugrunde, die Steuerung bei der Förderung der Portionen aus pulvrigem oder körnigem Schüttgut, der sogenannten Pfropfenförderung, zu vereinfachen, in Uebereinstimmung mit der eingespeisten Schüttgutmenge. Dies gelingt überraschend durch ein Verfahren, bzw. durch eine Vorrichtung mit den im Kennzeichen des Anspruches 1 bzw. 5 beschriebenen Merkmalen.

Der Füllgrad des in etwa dem Volumen einer Gutportion entsprechenden Sendegefässes wird überwacht, wobei über einen Sensor ein der Druckleitung zum Sendegefäss zugeordnetes Ventil geöffnet wird, wenn das Sendegefäss gefüllt ist.

Die Taktfrequenz für das periodisch, gegengleiche Oeffnen und Schliessen der beiden Druckleitungen über die ihnen zugeordneten Ventile kann auf unterschiedliche Weise erreicht werden. So kann eine zeitabhängige Steuerung, beispielsweise mit mindestens einem Monoflop, zwischen den beiden Ventilen vorgesehen sein, so dass nach Oeffnen des ersten Ventils zum Sendegefäss das Oeffnen des zweiten Ventils zur Förderleitung und damit das Schliessen des ersten Ventils verzögert erfolgt.

Ebenso ist eine unabhängige Steuerung des zweiten Ventils über einen Leerstandsensor möglich, der im Bereich des trichterförmigen Auslaufs des Sendegefässes angeordnet ist.

In gleicher Weise werden - allerdings über einen einzigen, analogen Niveau-Sensor - jeweils bei Erreichen der vollen Füllhöhe im Sendegefäss bzw. bei Erreichen des Leerstandes über jeweils einen von zwei Schwellwertschaltern die beiden Ventilen betätigt.

Die Erfindung wird im folgenden anhand der Zeichnung beispielhaft beschrieben. Es zeigen

Fig. 1    eine bevorzugte Ausführungsform eines in erfindungsgemässer Weise gesteuerten Pfropfenförderers, zu dem die

Fig. 2 und 3   Varianten darstellen.

Aus einem unter Druck stehenden Vorratsgefäss 1 wird das Schüttgut mittels einer Zellenradschleuse 2 in der Weise in ein Sendegefäss 3 eingeschleust, wie dies in der DE-PS 26 26 411 beschrieben ist. Im Bereich des Einlaufs dieses Sendegefässes 3, dessen Volumen im wesentlichen dem Volumen eines zu bildenden Gutpfropfens entspricht, ist in bekannter Weise eine von einer gemeinsamen Versorgungsleitung 13 für das Druckmedium abzweigende Druckleitung 12 angeschlossen, die ein Elektromagnetventil 14, ein Feineinstellventil 15 sowie ein Rückschlagventil 16 aufweist. Analog dazu ist der Auslaufseite des Sendegefässes 3 bzw. dem diesem Gefäss 3 zugekehrten Ende einer Förderleitung 4 eine weitere Druckleitung 17 zugeordnet, die wie die Leitung 12 ein Elektromagnetventil 18, ein Feineinstellventil 19 und ein Rückschlagventil 20 aufweist.

Abweichend von der bekannten Ausbildung ist an der Einlaufseite des Sendegefässes 3 ein Füllstandsensor 5 vorgesehen, der bei Erreichen einer vorbestimmten Füllhöhe innerhalb des Sendegefässes 3 ein Signal an das Ventil 14 abgibt, sodass dieses öffnet. Somit wird das Material im Sendegefäss 3 unter Druck gesetzt und gegen die Förderleitung 4 geschoben.

Gleichzeitig wird das vom Füllstandsensor 5 abgegebene Signal über eine Leitung 25 einem einstellbaren Zeitglied 24, z.B. mit zwei hintereinandergeschalteten Monoflops zugeführt, der nach Verstreichen einer mit Hilfe eines Einstellknopfes 23 einstellbaren Verweilzeit (erster Monoflop) über eine Leitung 26 ein Signal vorbestimmter Dauer (zweites Monoflop) an das Ventil 18 abgibt. Bei Aenderungen des Förderdurchsatzes braucht also lediglich die Verweilzeit mittels des Knopfes 23 entsprechend eingestellt werden.

Etwa in dem Augenblick, in dem das Ventil 18 der Druckleitung 17 zur Förderleitung 4 öffnet, schliesst das Ventil 14 der Druckleitung 12 zum Sendegefäss 3 und wird erst wieder bei Erreichen der vorbestimmten Füllhöhe im Sendegefäss 3 über ein vom Füllstandsensor 5 abgegebenes Signal geöffnet, wobei gleichzeitig das Ventil 18 schliesst. Der Rhythmus des entgegengesetzt stattfindenden Oeffnens und Schliessens der beiden Ventile ist periodisch, nur vom Durchsatz des Schüttgutes abhängig, wobei die Zeitdauer der jeweiligen Offen- und Geschlossen-Zustände der beiden Ventile unterschiedlich lang sein kann. Dabei wäre es auch denkbar, das Ventil 18 vom Sensor 5 zu steuern, indem dessen Ausgangssignal in einer zum Ventil 18 führenden Leitung differenziert wird (Koppelkondensator) und der negative Nadelimpuls am Ausgange des Differenziergliedes unmittelbar an das Ventil 18 abgegeben wird. Dieses kann über ein Zeitrelais (als magnetischer Betätiger) gesteuert sein, um allenfalls eine Verzögerungszeit an diesem unmittelbar einstellen zu können, wobei die Stufe 24 dann entfällt bzw. ihre Funktion in das Magnetventil 18 integriert ist.

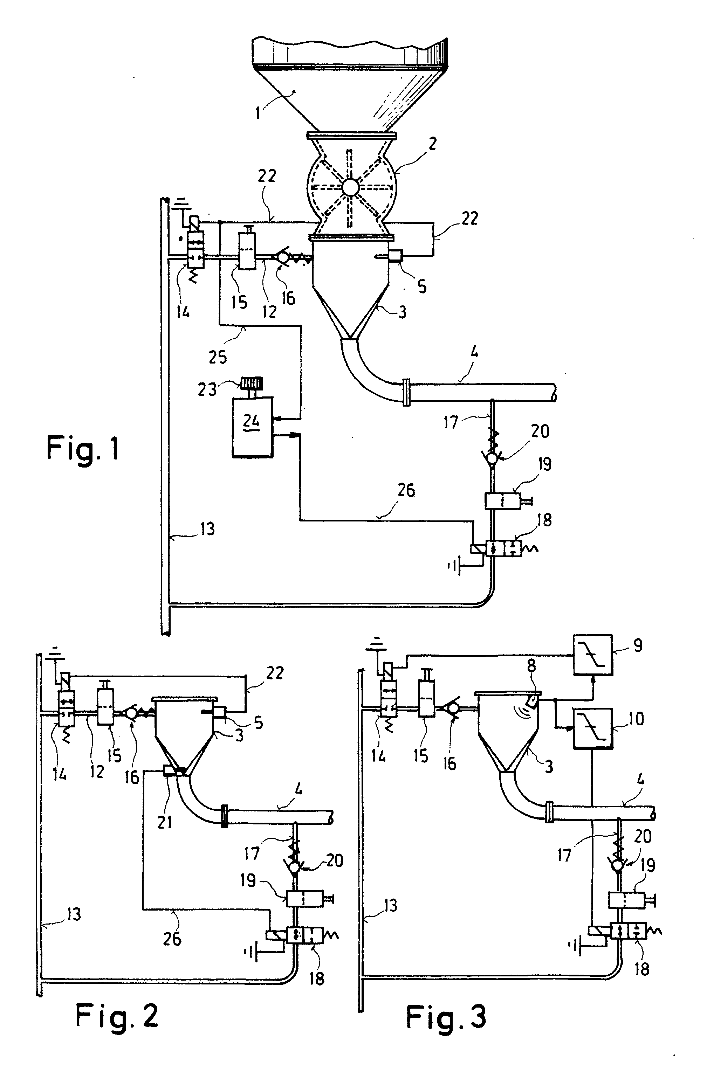

Während bei der Ausführungsform nach Fig. 1 immer noch ein Zeitglied 24, z.B. mit mindestens einem Monoflop vorgesehen ist, veranschaulicht Fig. 2 eine Ausführungsform, bei der das Ventil 18 ebenfalls über einen Sensor betätigt wird. Während also der Füllstandsensor 5 auch hier über seine Ausgangsleitung 22 mit dem Elektroventil 14 verbunden ist, ist ein Leerstandsensor 21 an die Leitung 26 angeschlossen, um das Ventil 18 zu steuern. Dieser Leerstandsensor 21 ist bei der gezeigten Ausführung an der Unterseite des Sendegefässes 3 angeordnet.

Während die Füllstandsmelder 5 und 21 praktisch digital arbeiten, ist in Fig. 3 die Arbeitsweise eines analog arbeitenden Niveaufühlers 8 gezeigt. Dieser misst sowohl das obere, als auch das untere Niveau innerhalb des Sendegefässes 3, wobei das obere Voll-Niveau durch einen Schwellwertschalter 9, das untere (Leer-) Niveau durch einen Schwellwertschalter 10 festgelegt wird. Gewünschtenfalls können die Schwellwerte beider Schalter 9 und 10 einstellbar sein. Dementsprechend wird bei Ueberschreiten des Schwellwertes des Schwellwertschalters 9 (Vollmeldung) das Ventil 14 betätigt, bei Unterschreiten des Schwellwertes der Schwellwertstufe 10 (Leermeldung) das Ventil 18.

Für die meisten Schüttgüter ist es schwierig, analoge Niveaumessungen durchzuführen (Staubatmosphäre), aus welchem Grunde ein digital arbeitender Sensor (vgl. Fig. 1) zur Vollmeldung bevorzugt wird.

Selbstverständlich kommt es auf die Grösse des Sendegefässes nicht besonders an, vielmehr darauf, dass der Vollmelder an einer Stelle angeordnet ist, die dem Volumen des Pfropfens entspricht.

**Patentansprüche**

1. Verfahren zum Bilden von Portionen aus pulvrigem oder körnigem Schüttgut, bei dem das Schüttgut in ein Sendegefäss (3) gespeist und von diesem in eine Förderleitung (4) transportiert wird, wobei der Transport des Schüttgutes vom Sendegefäss (3) und in die Förderleitung (4) mittels einer Gas-/Luftströmung erfolgt, **dadurch gekennzeichnet,** dass die Gasströmung in Sendegefäss (3) und Förderleitung (4) in Abhängigkeit von dem Erreichen des Füllzustands des Sendegefässes über wenigstens einen Füllstandsensor (5 ; 8) gesteuert wird.

2. Verfahren nach Anspruch 1, dadurch gekennzeichnet, dass bei Erreichen eines vorbestimmten Füllzustands die Druckleitung (12) zum Sendegefäss (3) geöffnet und diejenige (17) zur Förderleitung (4), vorzugsweise über je ein Elektromagnetventil (14; 18), geschlossen wird.

3. Verfahren nach Anspruch 1 oder 2, dadurch gekennzeichnet, dass das Oeffnen der Druckleitung (17) zur Förderleitung (4) über einen als Verzögerungsschaltung dienenden Monoflop (24) geschieht, dessen Verweilzeit in Abhängigkeit zum Förderfluss des Schüttgutes eingestellt werden kann, wobei mit dem Oeffnen der Druckleitung (17) zur Förderleitung (4) das Schliessen der Druckleitung (12) zum Sendegefäss (3) erfolgt.

4. Verfahren nach Anspruch 1 oder 2, dadurch gekennzeichnet, dass bei Erreichen des Leerzustandes des Sendegefässes (3) über einen Leerstandsensor (21; 8) die Druckleitung (12) zum Sendegefäss (3) geschlossen und diejenige (17) zur Förderleitung (4) geöffnet wird.

5. Vorrichtung zur Durchführung des Verfahrens nach einem der vorhergehenden Ansprüche, mit einem in eine Förderleitung (4) mündenden Sendegefäss (3), das über eine Schleuse (1) mit dem Schüttgut gespeist wird, wobei jeweils mit mindestens einem steuerbaren Ventil versehene pneumatische Leitungen (12; 17) sowohl eingangsseitig des Sendegefässes (3) als auch ausgangsseitig mit der Förderleitung (4) verbunden sind und eine Steuereinrichtung zum intermittierenden Beaufschlagen des Sendegefässes bzw. der Förderleitung mit Druckmedium über die steuerbaren Ventile (14, 18) vorgesehen ist, **dadurch-gekennzeichnet,** dass die Steuerungseinrichtung wenigstens einen Füllstandsensor (5; 8) zur Feststellung des Vollfüllstandes des Schüttgutes im Sendegefäss (3) aufweist.

6. Vorrichtung nach Anspruch 5, dadurch gekennzeichnet, dass der Füllstandsensor (5; 8) am Sendegefäss im Bereich der Einflussöffnung für das Schüttgut angeordnet ist und mit einem das Oeffnen und Schliessen der Druckleitung (12) zum Sendegefäss (3) bewirkenden Ventil (14), das vorzugsweise ein Elektromagnetventil ist, verbunden ist.

7. Vorrichtung nach Anspruch 5 oder 6, dadurch gekennzeichnet, dass die Steuereinrichtung zusätzlich ein Zeitglied (24) aufweist.

8. Vorrichtung nach Anspruch 5, 6 oder 7, dadurch gekennzeichnet, dass die Steuereinrichtung zusätzlich einen Leerstandssensor (21) aufweist, der vorzugsweise am trichterförmigen Auslauf des Sendegefässes (3) angeordnet ist.

Fig. 1

Fig. 2

Fig. 3

Europäisches
Patentamt

**EUROPÄISCHER
RECHERCHENBERICHT**

Nummer der Anmeldung

**EP 91 10 2128**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-2 122 858  (LINDER) <br> * Spalte 3, Zeile 62 - Spalte 6, Zeile 15; Figur 1 * | 1,5,6,8 | B 65 G 53/66 <br> B 65 G 53/12 |
| A | | 2,4 | |
| | — — — | | |
| X | DD-A-2 604 77  (MICHEL et al.) <br> * Seite 3, Zeile 20 - Seite 4, Zeile 6; Figur 1 * | 1,5 | |
| | — — — | | |
| A | DE-A-1 456 612  (ALBERT KLEIN) <br> * Ansprüche 1-7; Figur 1 * | 1,5 | |
| | — — — | | |
| D,A | DE-C-2 626 411  (BÜHLER-MIAG) <br> * das ganze Dokument * | 1,5 | |
| | — — — | | |
| D,A | DE-B-2 622 073  (WAESCHLE MASCHINENFABRIK) <br> * Figuren 1,2 * | 1,5 | |
| | — — — — — | | |

RECHERCHIERTE
SACHGEBIETE (Int. Cl.5)

B 65 G

Der vorliegende Recherchenbericht wurde für alle Patentansprüche erstellt

| Recherchenort | Abschlußdatum der Recherche | Prüfer |
|---|---|---|
| Berlin | 05 Juni 91 | SIMON J J P |